# EUROPEAN PATENT APPLICATION

(11) **EP 4 580 222 A1**
(43) Date of publication of application: **02.07.2025**
(21) Application number: 23872378.7
(22) Date of filing: 27.09.2023
(51) Int. Cl.: H04W 4/06, H04W 76/40

(54) **COMMUNICATION METHOD**

(30) Priority: 28.09.2022 US 202263410719 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte
(86) International application number: PCT/JP2023/035053
(87) International publication number: WO 2024/071156

(57) **Abstract**

A communication method includes: receiving, by a user equipment in a radio resource control (RRC) inactive state that has joined a multicast session, a paging message from a network node, the paging message notifying the user equipment of a start of the multicast session; and determining, by the user equipment, whether to transition from the RRC inactive state to an RRC connected state in response to receiving the paging message. The paging message includes session information about the multicast session and identification information associated with the session information for specifying one or more user equipments to be caused to transition to the RRC connected state among a plurality of user equipments that have joined the multicast session. The determining includes determining whether to transition to the RRC connected state based on the session information and the identification information.

## Description

### TECHNICAL FIELD

The present disclosure relates to a communication method used in a mobile communication system.

### BACKGROUND OF INVENTION

The 3rd Generation Partnership Project (3GPP) has defined the technical specifications of New Radio (NR) that is radio access technology of the fifth generation (5G). NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of 5G/NR (for example, see Non-Patent Document 1).

### CITATION LIST

### NON-PATENT LITERATURE

Non-Patent Document 1: 3GPP Technical Specification: TS 38.300 V17.1.0

### SUMMARY

In a first aspect, a communication method is a communication method used in a mobile communication system for providing a multicast/broadcast service (MBS), the communication method including the steps of: receiving, by a user equipment in a radio resource control (RRC) inactive state that has joined a multicast session, a paging message from a network node (or a network apparatus), the paging message notifying the user equipment of a start of the multicast session; and determining, by the user equipment, whether to transition from the RRC inactive state to an RRC connected state in response to receiving the paging message. The paging message includes session information about the multicast session and identification information associated with the session information for specifying one or more user equipments to be caused to transition to the RRC connected state among a plurality of user equipments that have joined the multicast session. The determining includes determining whether to transition to the RRC connected state based on the session information and the identification information.

In a second aspect, a communication method is a communication method used in a mobile communication system for providing a multicast/broadcast service (MBS), the communication method including the steps of: receiving, by a user equipment, configuration information configured per user equipment from a network node; receiving, by the user equipment in a radio resource control (RRC) inactive state that has joined a multicast session, a paging message from the network node, the paging message notifying the user equipment of a start of the multicast session; and determining, by the user equipment, whether to transition from the RRC inactive state to an RRC connected state in response to receiving the paging message. The paging message includes a session identifier indicating the multicast session. The configuration information is information indicating whether to cause the user equipment to perform the determination taking into account the session identifier.

In a third aspect, a communication method is a communication method used in a mobile communication system for providing a multicast/broadcast service (MBS), the communication method including the steps of: receiving, by the user equipment in a radio resource control (RRC) inactive state that has joined a multicast session, a paging message from a network node, the paging message notifying the user equipment of a start of the multicast session; and determining, by the user equipment, whether to transition from the RRC inactive state to an RRC connected state in response to receiving the paging message. The determining includes determining whether to transition to the RRC connected state based on whether the user equipment has a multicast configuration required to receive the multicast session, when the paging message includes a session identifier indicating the multicast session that the user equipment has joined.

In a fourth aspect, a communication method is a communication method used in a mobile communication system for providing a multicast/broadcast service (MBS), the communication method including the steps of: receiving, by the user equipment in a radio resource control (RRC) inactive state that has joined a multicast session, a paging message including identification information indicating to page all user equipments that have joined any multicast session from a network node; and determining, by the user equipment, to transition from the RRC inactive state to an RRC connected state based on the paging message including the identification information.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram for explaining an operation that enables UE in an RRC inactive state to perform multicast reception.
FIG. 7 is a diagram for explaining an operation of paging each UE in an RRC inactive state through a group notification.
FIG. 8 is a diagram illustrating a configuration of a paging message in Release 17 of the 3GPP Technical Specifications.
FIG. 9 is a flowchart indicating an example of a first operation pattern according to a first embodiment.
FIG. 10 is a flowchart indicating an example of a second operation pattern according to the first embodiment.
FIG. 11 is a flowchart indicating an operation example of UE in a third operation pattern according to the first embodiment.
FIG. 12 is a flowchart indicating an operation example of a mobile communication system according to a modification of the first embodiment.
FIG. 13 is a flowchart indicating an operation example of a mobile communication system according to a second embodiment.
FIG. 14 is a flowchart indicating an operation example of a mobile communication system according to a third embodiment.
FIG. 15 is a flowchart indicating an operation example of a mobile communication system according to a fourth embodiment.

### DESCRIPTION OF EMBODIMENTS

A mobile communication system according to an embodiment is described with reference to the drawings. In the description of the drawings, the same or similar parts are denoted by the same or similar reference signs.

### (1) First Embodiment

A first embodiment is described first.

### (1.1) System Configuration

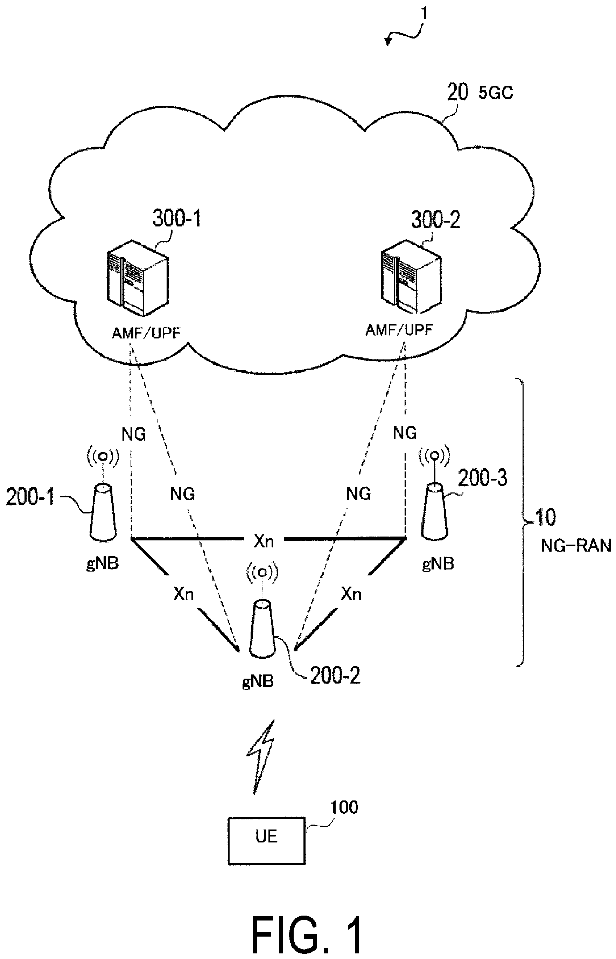

FIG. 1 is a diagram illustrating a configuration of a mobile communication system 1 according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10 (a network 10). In addition, the 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (vehicle UE), and a flying object or an apparatus provided on a flying object (aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

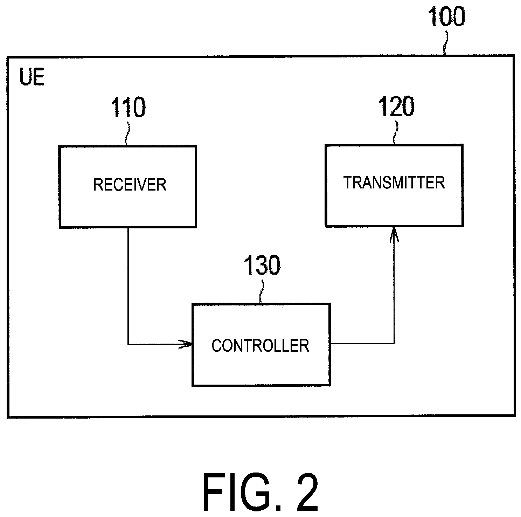

FIG. 2 is a diagram illustrating a configuration of the UE 100 (user equipment) according to an embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. Such processing includes processing of respective layers to be described later. The operations of the UE 100 described above and below may also be performed under the control of a controller 230. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

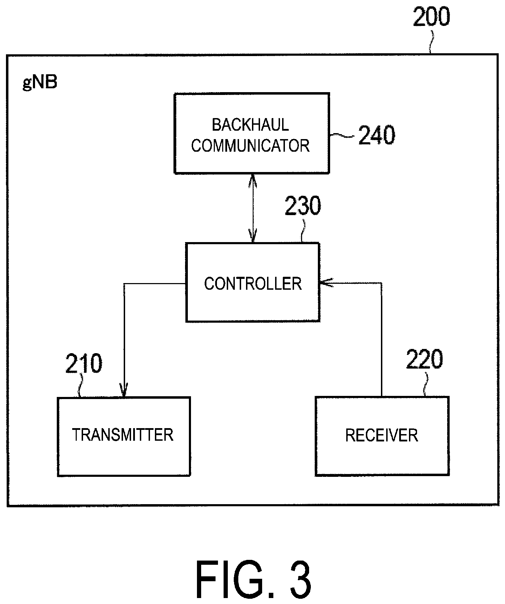

FIG. 3 is a diagram illustrating a configuration of the gNB 200 (base station) according to an embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the gNB 200. Such processing includes processing of respective layers to be described later. The operations of the gNB 200 described above and below may also be performed under the control of the controller 230. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface between a base station and the core network. Note that the gNB 200 may include a Central Unit (CU) and a Distributed Unit (DU) (i.e., functions are divided), and both units may be connected via an F1 interface that is a fronthaul interface.

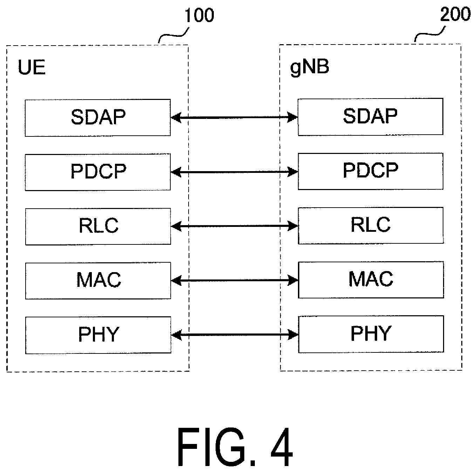

FIG. 4 is a diagram illustrating a configuration of a protocol stack of a radio interface of a user plane handling data.

A radio interface protocol of the user plane includes a PHYsical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

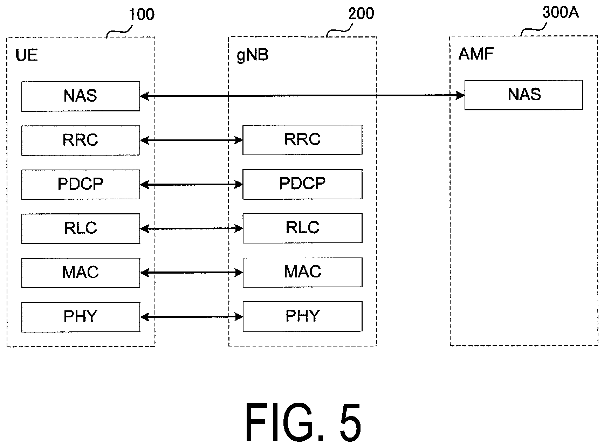

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection is present between the RRC of the UE 100 and the RRC of the gNB 200 (RRC connection), the UE 100 is in an RRC connected state. When no connection is present between the RRC of the UE 100 and the RRC of the gNB 200 (RRC connection), the UE 100 is in an RRC idle state. When the connection between the RRC of the UE 100 and the RRC of the gNB 200 is suspended, the UE 100 is in an RRC inactive state.

The NAS layer that is positioned upper than the RRC layer performs session management, mobility management, and the like. NAS signaling is transmitted between the NAS layer of the UE 100 and the NAS layer of an AMF 300A. Note that the UE 100 includes an application layer other than the protocol of the radio interface. In addition, a layer lower than the NAS layer is referred to as an AS layer.

### (1.2) Overview of MBS

The mobile communication system 1 can perform delivery with high resource efficiency by using the multicast/broadcast service (MBS).

In a multicast communication service (also referred to as "MBS multicast"), the same service and the same specific content data are simultaneously provided to a specific UE set. That is, not every UE 100 in the multicast service area is allowed to receive data. The multicast communication services are delivered to the UE 100 using a multicast session, which is a type of MBS session. The UE 100 can receive the multicast communication services in the RRC connected state using mechanisms such as Point-to-Point (PTP) and/or Point-to-Multipoint (PTM) delivery. The UE 100 may receive the multicast communication services in the RRC inactive (or RRC idle) state. Such a delivery mode is also referred to as "delivery mode 1".

In the broadcast communication services (also referred to as "MBS broadcast"), the same service and the same specific content data are provided simultaneously to every UE 100 within a geographic area. That is, every UE 100 in the broadcast service area is allowed to receive the data. The broadcast communication services are delivered to the UE 100 using a broadcast session, which is a type of MBS session. The UE 100 can receive the broadcast communication services in any state of the RRC idle state, the RRC inactive state, and the RRC connected state. Such a delivery mode is also referred to as "delivery mode 2".

Main logical channels used for MBS delivery are a multicast traffic channel (MTCH), a dedicated traffic channel (DTCH), and a multicast control channel (MCCH). The MTCH is a PTM downlink channel for transmitting MBS data of either multicast or broadcast sessions from the network 10 to the UE 100. The DTCH is a PTP channel for transmitting MBS data of a multicast session from the network 10 to the UE 100. The MCCH is a PTM downlink channel for transmitting MBS broadcast control information associated with one or more MTCHs from the network 10 to the UE 100.

Regarding a configuration in MBS broadcast, the UE 100 in the RRC idle state, the RRC inactive state, or the RRC connected state receives an MBS configuration for a broadcast session (e.g., parameters required for MTCH reception) via the MCCH. Parameters required for reception of the MCCH (MCCH configuration) are provided through system information. In particular, system information block type 20 (SIB 20) includes the MCCH configuration. Note that SIB type 21 (SIB 21) includes information related to service continuity of MBS broadcast reception. The MCCH provides a list of all broadcast services including ongoing sessions transmitted on the MTCH, and the related information of the broadcast session includes an MBS session identifier (e.g., Temporary Mobile Group Identity (TMGI)), related MTCH scheduling information, and information about neighboring cells providing a specific service on the MTCH.

On the other hand, with respect to MBS multicast, the current technical specifications of the 3GPP enable the UE 100 to receive data of multicast sessions only in RRC connected state. When the UE 100 joining a multicast session is in the RRC connected state and the multicast session is activated, the gNB 200 transmits an RRC reconfiguration message including an MBS configuration related to the multicast session to the UE 100. Such an MBS configuration is also referred to as a multicast radio bearer (MRB) configuration, an MTCH configuration, or a multicast configuration. Such an MRB configuration (MRB-ToAddMod) includes an MBS session identifier (mbs-SessionId), an MRB identifier (mrb-Identity), and other parameters such as a PDCP configuration (pdcp-Config) for an MRB (multicast MRB) to be configured in the UE 100.

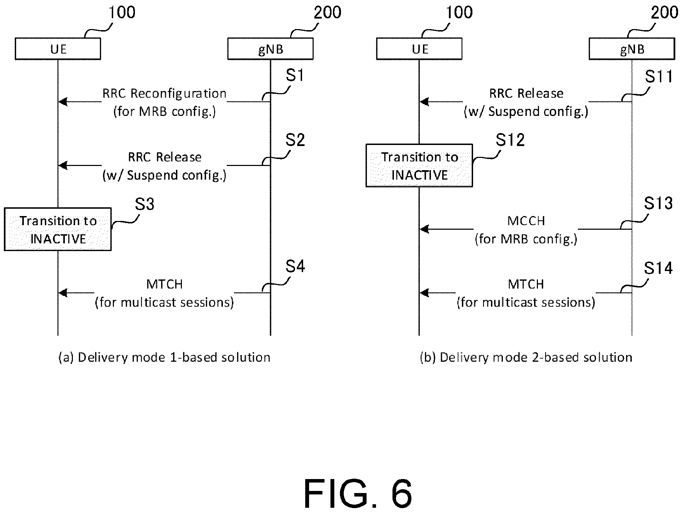

In the following embodiment, an operation of enabling the UE 100 in the RRC inactive state to perform multicast reception will be mainly described. FIG. 6 illustrates an overview of the operation.

As a solution for the UE 100 in the RRC inactive state to perform multicast reception, a solution based on the delivery mode 1 shown in FIG. 6A and a solution based on the delivery mode 2 shown in FIG. 6B are considered.

In the solution based on the delivery mode 1 shown in FIG. 6A, in step S1, the gNB 200 transmits an RRC Reconfiguration message including the MBS configuration (multicast configuration) related to multicast sessions to the UE 100 in the RRC connected state. The UE 100 receives the multicast data on the MTCH via the multicast sessions (multicast MRB) based on the multicast configuration received in the RRC Reconfiguration message.

In step S2, the gNB 200 transmits an RRC release (Release) message for causing the UE 100 to transition to the RRC inactive state to the UE 100 in the RRC connected state. The RRC Release message includes a configuration (Suspend Config.) for the RRC inactive state.

In step S3, the UE 100 transitions from the RRC connected state to the RRC inactive (INACTIVE) state in response to receiving the RRC Release message in step S2.

In step S4, the UE 100 in the RRC inactive state continues using the multicast configuration of step S1 to receive the multicast data on the MTCH through the multicast sessions.

This enables the UE 100 in the RRC inactive state to perform multicast reception. Note that, although an example in which multicast configuration is performed using an RRC Reconfiguration message has been described, multicast configuration may be performed using an RRC Release message.

Both the RRC Reconfiguration message and the RRC Release message are RRC messages transmitted per UE on the dedicated control channel (DCCH), and are hereinafter also referred to as dedicated RRC messages.

On the other hand, in the solution based on the delivery mode 2 shown in FIG. 6B, in step S11, the gNB 200 transmits an RRC Release message for causing the UE 100 to transition to the RRC inactive state to the UE 100 in the RRC connected state. The RRC Release message includes a configuration (Suspend Config.) for the RRC inactive state.

In step S12, the UE 100 transitions to the RRC inactive (INACTIVE) state in response to receiving the RRC Release message in step S11.

In step S13, the gNB 200 transmits the MCCH including the MBS configuration (multicast configuration) for the multicast sessions. The UE 100 receives the MCCH. Note that the UE 100 receives the SIB 20 prior to the reception of the MCCH, and receives the MCCH based on the SIB 20. Note that the MCCH transmission (and reception) may be performed before step S11 or may be performed simultaneously with step S11.

In step S14, the UE 100 in the RRC inactive state receives the multicast data on the MTCH via the multicast sessions based on the multicast configuration received on the MCCH in step S13. This enables the UE 100 in the RRC inactive state to perform multicast reception.

### (1.3) Group Notification

When the UE 100 joining a multicast session is in the RRC connected state and the multicast session is activated, the gNB 200 transmits an RRC Reconfiguration message including an MBS configuration (i.e., multicast configuration) related to the multicast session to the UE 100. Thereafter, when there is (temporarily) no date to be transmitted to the UE 100 for the multicast session, the gNB 200 may cause the UE 100 to transition to the RRC idle state or the RRC inactive state.

In the current technical specifications of MBS, group notification using a paging message is defined. The gNB 200 that supports MBS gives a notification to each UE 100 in the RRC idle state and each UE 100 in the RRC inactive state using group notification when a multicast session is activated by the core network (CN) 20 or when the gNB 200 has multicast session data to deliver. A trigger to transmit such a group notification, that is, activation of a multicast session or generation of multicast session data, is referred to as a "start of a multicast session". The generation of multicast session data is also referred to as data availability.

The paging message used as the group notification includes an MBS session identifier (for example, TMGI) for collectively paging the UE 100 in the RRC idle state and the UE 100 in the RRC inactive state that have joined the related multicast session. As a result, it is possible to collectively page UE in units of UE groups that have already joined the multicast sessions, instead of paging each UE individually. Note that the paging message used as the group notification is scheduled by a PDCCH to which a paging RNTI (P-RNTI) is applied. Each UE 100 in the RRC idle state and each UE 100 in the RRC inactive state that have joined the multicast sessions receive the group notification by monitoring a paging channel (PCCH: Paging Control Channel).

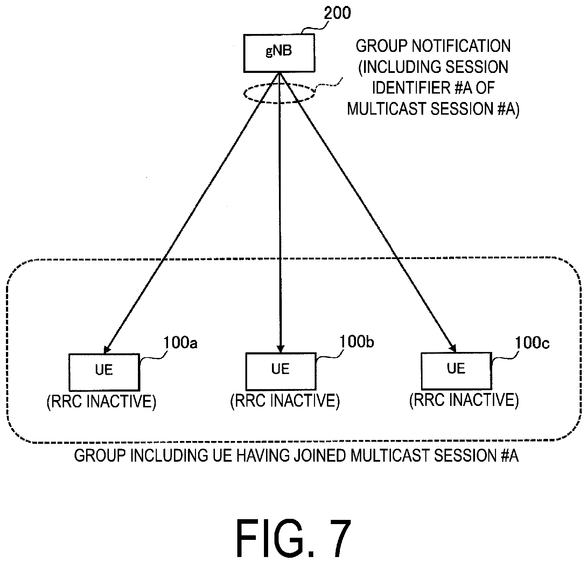

FIG. 7 is a diagram for explaining an operation of paging each UE 100 in an RRC inactive state through a group notification.

In the illustrated example, it is assumed that each UE 100 (UE 100a to 100c) in the RRC inactive state has already joined a multicast session #A. Upon detecting the start of the multicast session #A, the gNB 200 generates a paging message (group notification) including an identifier ("TMGI #A") of the multicast session #A and transmits the paging message. Paging in which a paging message is generated by the gNB 200 in this manner is also referred to as RAN-initiated paging.

The RRC layer of each UE 100 (UE 100a to 100c) in the RRC inactive state receives the corresponding paging message from the gNB 200 and recognizes that the corresponding paging message includes the TMGI #A of the multicast session #A that the UE has joined. Each UE 100 (UE 100a to 100c) in the RRC inactive state notifies from its own RRC layer to its own upper layer (for example, an application layer) of TMGI #A, so the upper layer recognizes the start of the multicast session that the UE has joined. The RRC layer determines to transition to the RRC connected state in response to an instruction from the upper layer. As a result, each UE 100 (UE 100a to 100c) in the RRC inactive state starts the RRC restoration process in order to transition to the RRC connected state.

As described above, according to the group notification, it is possible to collectively page a group including each UE 100 (UE 100a to 100c) in the RRC inactive state that has joined the multicast session. However, for example, it may be considered that the UE 100 that can perform multicast reception in the RRC inactive state (for example, UE 100 with a valid multicast configuration) does not need to transition to the RRC connected state through the group notification. When the UE 100 is in the RRC inactive state, power consumption can be reduced compared to the UE being in the RRC connected state, and thus it is preferable that the UE 100 maintain the RRC inactive state from the viewpoint of reduction of power consumption. In addition, when a large number of UEs 100 transitions from the RRC inactive state to the RRC connected state, there is a concern that loads of the gNB 200 will increase and network congestion may occur.

In each of the following embodiments, a method that UE 100 in the RRC inactive state that has joined a multicast session can be selectively paged by a paging message (group notification) will be described.

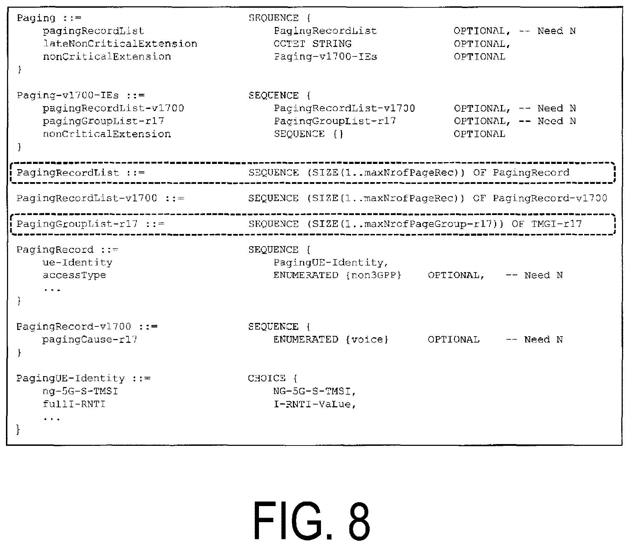

Here, a configuration example of a general paging message will be described. FIG. 8 is a diagram illustrating a configuration of a paging message in Release 17 of the 3GPP Technical Specifications. Note that FIG. 8 is an excerpt from the technical specifications "TS38.331" for the RRC layer.

The paging message may include a paging record list (pagingRecordList) and/or a paging group list (pagingGroupList). The group notification is a paging message including a paging group list (pagingGroupList).

The paging record list (pagingRecordList) is a list including one or more paging records (PagingRecord). Each paging record (PagingRecord) includes a UE identifier (ue-Identity) of a UE 100 to be paged. The UE identifier (ue-Identity) is NG-5G-S-TMSI when the corresponding UE 100 is in the RRC idle state, and is I-RNTI-Value when the corresponding UE 100 is in the RRC inactive state. When the paging record list (pagingRecordList)includes the UE identifier of the UE 100, the UE 100 determines to transition to the RRC connected state.

On the other hand, the paging group list (pagingGroupList) is a list including one or more session identifiers (TMGIs). The UE 100 in the RRC inactive state (and the RRC idle state) that has joined the multicast session determines to transition to the RRC connected state when the paging group list (pagingGroupList) includes the session identifier (TMGI) of the multicast session that the UE has joined.

### (1.4) Operation according to First Embodiment

In the first embodiment, new information elements associated with session information (for example, TMGI) in a paging message are introduced in order to selectively page UE 100 in the RRC inactive state that the UE has already joined a multicast session with a paging message (group notification). The new information elements are identification information for specifying one or more UEs 100 to be caused to transition to the RRC connected state among a plurality of UEs 100 that have joined the multicast session.

### (1.4.1) First Operation Pattern according to First Embodiment

In a first operation pattern according to the first embodiment, the identification information is a list including the UE identifier of each UE 100 to be caused to transition to the RRC connected state among a plurality of UEs 100 that have joined a multicast session. As a result, it is possible to selectively cause the UE 100 specified on the list to transition to the RRC connected state among the UEs 100 in the RRC inactive state that have joined the multicast session.

To be more specific, in the present operation pattern, the UE 100 that is in the RRC inactive state and has joined the multicast session receives a paging message notifying the UE of the start of a multicast session from the gNB 200. The UE 100 determines whether to transition from the RRC inactive state to the RRC connected state upon reception of the paging message. The paging includes the information of (a) and (b) below.
(a) Session information about the multicast session
(b) a list (also referred to as a "new UE identifier list") that is associated with the session information and includes the UE identifier of each UE 100 to be caused to transition to the RRC connected state among a plurality of UEs 100 that have joined the multicast session.

UE 100 that is in the RRC inactive state and has joined the multicast session determines whether to transition to the RRC connected state based on (a) the session information and (b) the new UE identifier list. For example, the UE 100 determines to transition to the RRC connected state based on the paging message including the session information corresponding to the multicast session that UE has joined and the new UE identifier list including its own UE identifier.

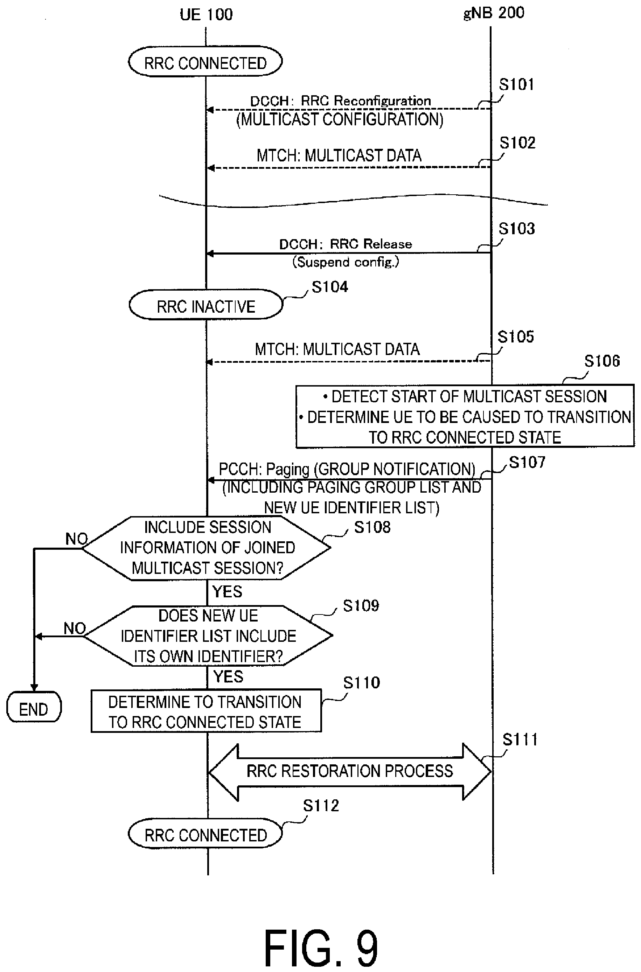

FIG. 9 is a flowchart indicating an example of the first operation pattern according to the first embodiment. Prior to the present operation, it is assumed that the UE 100 has joined a multicast session.

In step S101, the gNB 200 may transmit a multicast configuration necessary for reception of a multicast session (that is, multicast reception) to the UE 100 in the RRC connected state in a dedicated RRC message (in the illustrated example, an RRC Reconfiguration message). The UE 100 may receive the multicast configuration in a dedicated RRC message.

In step S102, the gNB 200 transmits the multicast data on the MTCH through the multicast session based on the multicast configuration of step S101. The UE 100 may receive the multicast data on the MTCH through the multicast session based on the multicast configuration of the S101.

In step S103, the gNB 200 transmits the RRC Release message including Suspend config. to the UE 100. The UE 100 receives the RRC Release message. The RRC Release message may include a multicast configuration required for reception of the multicast session.

In step S104, the UE 100 transitions to the RRC inactive state from the RRC connected state upon reception of the RRC Release message in step S103.

The UE 100 that has transitioned to the RRC inactive state monitors a paging message used as a group notification. The UE 100 in the RRC inactive state may await the start of a multicast session. Alternatively, in step S105, the UE 100 in the RRC inactive state may receive the multicast data on the MTCH through the multicast session based on the multicast configuration configured in step S101 or S103 (or the multicast configuration broadcast on the MCCH). The UE 100 may receive the multicast data on the MTCH through the multicast session based on the multicast configuration transmitted on the MCCH from the gNB 200.

In step S106, the gNB 200 may detect the start of the multicast session. Here, the multicast session is assumed to be a multicast session #A indicated by TMGI #A. The gNB 200 determines UE 100 to be caused to transition to the RRC connected state from among UEs 100 in the RRC inactive state that have joined the multicast session #A. In other words, the gNB 200 determines the UE 100 to maintain the RRC inactive state from among the UEs 100 in the RRC inactive state that have joined the multicast session #A.

In step S107, the gNB 200 generates a paging message to be used as a group notification and transmits the paging message on the PCCH. The UE 100 receives the paging message.

The paging message includes a paging group list (pagingGroupList) which is an example of session information. The paging group list (pagingGroupList) includes the TMGI #A indicating the multicast session to be started.

In the present operation pattern, the paging message further includes a new UE identifier list associated with the session information. The new UE identifier list is a list different from a paging record list (pagingRecordList). The new UE identifier list is a list including the UE identifiers (I-RNTIs) of the UE 100 to be caused to transition to the RRC connected state by the restoration (resume) of the RRC connection.

A new UE identifier list may be provided for each entry (i.e., for each TMGI) of the paging group list (pagingGroupList). In this case, the paging message may include a plurality of new UE identifier lists each associated with a different multicast session (TMGI).

Alternatively, new UE identifier lists may not be provided for each multicast session (TMGI). For example, the new UE identifier list may be a list of UE identifiers associated with a start of a multicast session (not each session) (details of such operation will be described in a fourth embodiment).

In step S108, the UE 100 in the RRC inactive state checks whether the paging message received in step S107 includes the session information (TMGI) of the session that the UE has joined. When the paging message does not include the session information (TMGI) of the session that the UE 100 has joined (step S108: NO), the UE 100 in the RRC inactive state determines to maintain the RRC inactive state without transitioning to the RRC connected state.

On the other hand, when the paging message includes the session information (TMGI) of the session that the UE has joined (step S108: YES), in step S109, the UE 100 in the RRC inactive state checks whether the new UE identifier list in the paging message includes the UE identifier (I-RNTI) of the UE itself. When the new UE identifier list does not include its own UE identifier (I-RNTI) (step S109: NO), the UE 100 in the RRC inactive state determines to maintain the RRC inactive state without transitioning to the RRC connected state.

Note that when the paging message includes session information (TMGI) of the session that the UE 100 has joined (step S108: YES), the RRC layer of the UE may notify the upper layer of the UE of the TMGI. In addition, the RRC layer may notify the upper layer of reception of the TMGI performed in the RRC inactive state. This notification may be performed only when the new UE identifier list does not include the UE identifier (I-RNTI) of the UE.

When the new UE identifier list includes the UE identifier (I-RNTI) of the UE 100 (step S109: YES), in step S110, the UE in the RRC inactive state determines to transition to the RRC connected state. In this case, in step S111, the UE 100 in the RRC inactive state starts an RRC recovery process and transmits an RRC Resume Request message to the gNB 200. In the RRC recovery process, the UE 100 transitions from the RRC inactive state to the RRC connected state (step S112). Here, the RRC layer of the UE 100 may notify the upper layer that reception of the TMGI is performed in the RRC connected state.

When the new UE identifier list includes its UE identifier (I-RNTI) of the UE 100 (step S109: YES), the UE 100 may check whether the UE 100 has a valid multicast configuration for the multicast session that the UE 100 has joined. When the UE 100 has a valid multicast configuration, the UE 100 may consider that multicast reception is possible in the RRC inactive state and may determine to maintain the RRC inactive state. On the other hand, when the UE 100 does not have a valid multicast configuration, the UE 100 may consider that the 100 UE needs to transition to the RRC connected state in order to obtain a valid multicast configuration and may determine to transition from the RRC inactive state to the RRC connected state (step S110). Details of this operation will be described in a third embodiment below.

### (1.4.2) Second Operation Pattern according to First Embodiment

In the above-described first operation pattern, assuming that the new UE identifier list is a "list of UE identifiers for performing RRC restoration", when the gNB 200 wants to cause all of a plurality of UEs 100 in the RRC inactive state that have joined a multicast session to transition to the RRC connected state, the gNB 200 needs to include all the UE identifiers on the list, which may increase the size of a paging message.

Thus, in a second operation pattern, when the gNB 200 causes all of the plurality of UEs 100 to transition to the RRC connected state, the paging message includes all-specifying information, instead of the new UE identifier list, as identification information for specifying the UE 100 to transition to the RRC connected state. All-specifying information is identification information indicating specifying of all of the plurality of UEs 100 in the RRC inactive state that have joined the multicast session.

The UEs 100 in the RRC inactive state that have joined the multicast session receive the paging message. In the present operation pattern, the UE 100 determines to transition to the RRC connected state based on the paging message including session information (for example, TMGI of the multicast session that the UE has joined) and the paging message including all-specifying information.

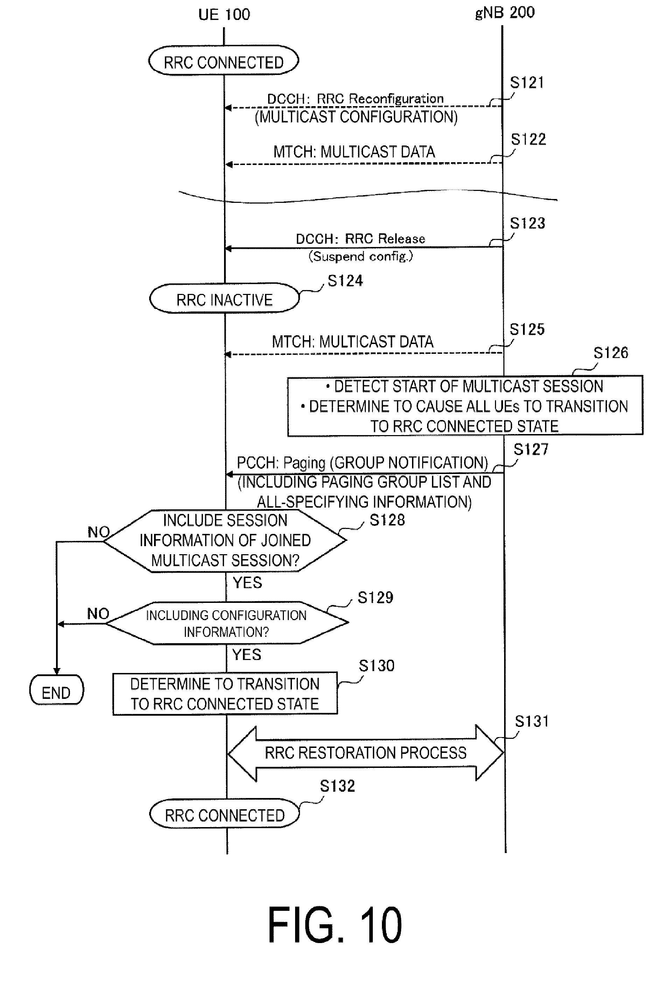

FIG. 10 is a flowchart indicating an example of the second operation pattern according to the first embodiment. Prior to the present operation, it is assumed that the UE 100 has joined a multicast session. Here, differences from the first operation pattern described above will be described, and overlapping description will be omitted.

The operations from step S121 to step S125 are the same as and/or similar to those of the first operation pattern described above.

In step S126, the gNB 200 may detect the start of a multicast session. Here, the multicast session is assumed to be a multicast session #A indicated by TMGI #A. In this operation pattern, the gNB 200 determines to cause all of a plurality of UEs 100 in the RRC inactive state that have joined the multicast session #A to transition to the RRC connected state.

In step S127, the gNB 200 generates a paging message to be used as a group notification and transmits the paging message on the PCCH. The UE 100 receives the paging message.

The paging message includes a paging group list (pagingGroupList) which is an example of session information. The paging group list (pagingGroupList) includes the TMGI #A indicating the multicast session to be started.

In the present operation pattern, the paging message further includes all-specifying information associated with the session information. The all-specifying information is identification information (for example, flag information) for specifying all UE identifiers.

In the paging message, the all-specifying information may be associated with any entry (i.e., any TMGI) of the paging group list (pagingGroupList). Alternatively, the all-specifying information may not be provided for each multicast session (TMGI). For example, the all-specifying information may be identification information specifying all of the UE identifiers associated with the start of the multicast session (not each session) (details of this operation will be described in a fourth embodiment).

In step S128, the UE 100 in the RRC inactive state checks whether the paging message received in step S127 includes the session information (TMGI) of the session that the UE has joined. When the paging message does not include the session information (TMGI) of the session that the UE 100 has joined (step S128: NO), the UE 100 in the RRC inactive state determines to maintain the RRC inactive state without transitioning to the RRC connected state.

On the other hand, when the paging message includes the session information (TMGI) of the session that the UE 100 has joined (step S128: YES), in step S129, the UE in the RRC inactive state checks whether the paging message includes the all-specifying information associated with the session information. When the paging message does not include the all-specifying information (step S129: NO), the UE 100 in the RRC inactive state determines to maintain the RRC inactive state without transitioning to the RRC connected state. However, when the paging message includes the above-described new UE identifier list, instead of the all-specifying information, the UE 100 performs an operation that is the same as and/or similar to that of the above-described first operation pattern.

Note that, when the paging message includes the session information (TMGI) of the session that the UE 100 has joined (step S128: YES), the RRC layer of the UE may notify the upper layer of the UE of the TMGI.

When the paging message includes the all-specifying information (step S129: YES), in step S130, the UE 100 in the RRC inactive state determines to transition to the RRC connected state. In this case, in step S131, the UE 100 in the RRC inactive state starts an RRC recovery process and transmits an RRC Resume Request message to the gNB 200. In the RRC recovery process, the UE 100 transitions from the RRC inactive state to the RRC connected state (step S132).

### (1.4.3) Third Operation Pattern according to First Embodiment

In the first operation pattern described above, it is possible to selectively page the UE 100 in the RRC inactive state that has joined the multicast session through group notification by including the new UE identifier list, which is not defined in Release 17 of the 3GPP Technical Specifications, in the paging message. To be more specific, only the UE 100 specified on the new UE identifier list is caused to transition from the RRC inactive state to the RRC connected state.

On the other hand, Release 17 of the 3GPP Technical Specifications defines that the UE 100 in the RRC inactive state determines to transition to the RRC connected state when the paging message includes the TMGI of the multicast session that the UE 100 has joined.

Therefore, when there is a UE 100 desiring to transition to the RRC connected state among the plurality of UEs 100 in the RRC inactive state that have joined the multicast session, the UEs 100 can be individually configured such that the new UE identifier list is invalidated in advance (for example, set by using a dedicated RRC message), and thus can be caused to transition to the RRC connected state through a paging message including the TMGI of the multicast session.

Alternatively, when it is desired to cause all the plurality of UEs 100 in the RRC inactive state that have joined the multicast session to transition to the RRC connected state, the UEs 100 can be collectively configured such that the new UE identifier list is invalidated in advance (for example, configured by using the MCCH), and thus can be caused to transition to the RRC connected state through a paging message including the TMGI of the multicast session.

That is, in the third operation pattern, the gNB 200 transmits the configuration information indicating whether the new UE identifier list (identification information) is valid to the UE 100. The UE 100 receives the configuration information. The UE 100 determines whether to transition to the RRC connected state based on the session information (TMGI) in the paging message without taking into account the new UE identifier list (identification information) when the configuration information indicates that the new UE identifier list (identification information) is invalid. That is, when the configuration information indicates that the new UE identifier list (identification information) is invalid, the UE 100 performs an operation defined in Release 17 of the 3GPP Technical Specifications. Note that, although the new UE identifier list of the first operation pattern has been described as an example, the all-specifying information of the second operation pattern may be handled in the same and/or similar manner.

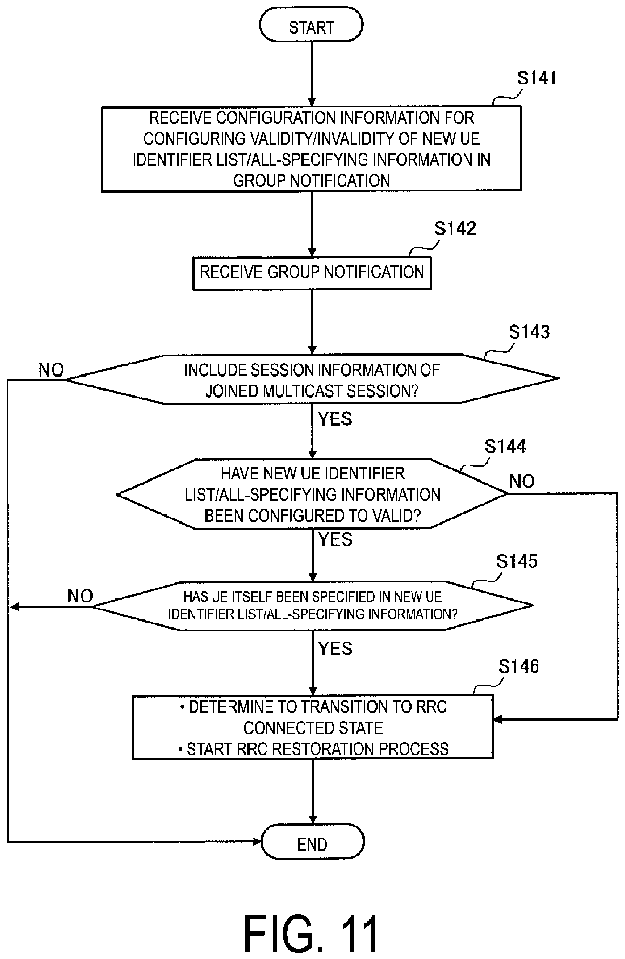

FIG. 11 is a flowchart indicating an operation example of the UE 100 in the third operation pattern according to the first embodiment. Prior to the present operation, it is assumed that the UE 100 has joined a multicast session. Here, differences from the first and second operation patterns described above will be described, and overlapping description will be omitted.

In step S141, the UE 100 receives, from the gNB 200, configuration information for configuring whether to validate or invalidate the new UE identifier list (and/or all-specifying information) in the group notification. The gNB 200 may include the configuration information in a dedicated RRC message (RRC Reconfiguration message or RRC Release message) and transmit the dedicated RRC message. The gNB 200 may transmit the configuration information on the MCCH to the UE 100 in the RRC inactive state.

In step S142, the UE 100 in the RRC inactive state receives a paging message (group notification) including a paging group list (pagingGroupList) and a new UE identifier list (or all-specifying information) from the gNB 200.

In step S143, the UE 100 in the RRC inactive state checks whether the paging group list (pagingGroupList) in the paging message includes the session information (TMGI) of the multicast session of the session that the UE has joined. When the paging group list (pagingGroupList) does not include the session information (TMGI) (step S143: NO), the UE 100 maintains the RRC inactive state.

When the paging group list (pagingGroupList) includes the session information (TMGI) (step S143: YES), the UE 100 checks whether the new UE identifier list (and/or the all-specifying information) has been validated based on the configuration information in step S141. When the new UE identifier list (and/or all-specifying information) is invalidated (step S144: NO), in step S146, the UE 100 in the RRC inactive state determines to transition to the RRC connected state, and starts the RRC recovery process.

When the new UE identifier list (and/or the all-specifying information) has been validated (step S144: YES), in step S145, the UE 100 in the RRC inactive state checks whether the UE itself has been specified on the new UE identifier list (or the all-specifying information) in the paging message received in step S142. When the UE 100 has not been specified (step S145: NO), the UE maintains the RRC inactive state.

When the UE 100 has been specified (step S145: YES), in step S146, the UE in the RRC inactive state determines to transition to the RRC connected state, and starts the RRC recovery process.

### (1.5) Modification of First Embodiment

With respect to the first operation pattern according to the first embodiment described above, an example in which the new UE identifier list associated with the session information in the paging message is a list (i.e., Allowed list) including the UE identifier of each UE 100 to be caused to transition to the RRC connected state among the plurality of UEs 100 that have joined the multicast session has been described.

However, the new UE identifier list may be a list (i.e., Block list) including the UE identifier of each UE 100 to not be caused to transition to the RRC connected state among the plurality of UEs 100 that have joined the multicast session. In such a modification, the UE 100 in the RRC inactive state determines to transition to the RRC connected state based on the paging message including the session information and the new UE identifier list not including the UE identifier of the UE.

Note that the paging message is not limited to including only one of the Allowed list and the Block list, and the paging message may include both the Allowed list and the Block list.

Similarly, the all-specifying information described in the second operation pattern according to the first embodiment described above may be identification information (flag information) indicating that all of the plurality of UEs 100 are not caused to transition to the RRC connected state. That is, the paging message includes the all-specifying information instead of the new UE identifier list when all of the plurality of UEs 100 are not caused to transition to the RRC connected state. In such a modification, the UE 100 in the RRC inactive state includes a step of determining to transition to the RRC connected state based on the paging message including the session information and the paging message not including the all-specifying information.

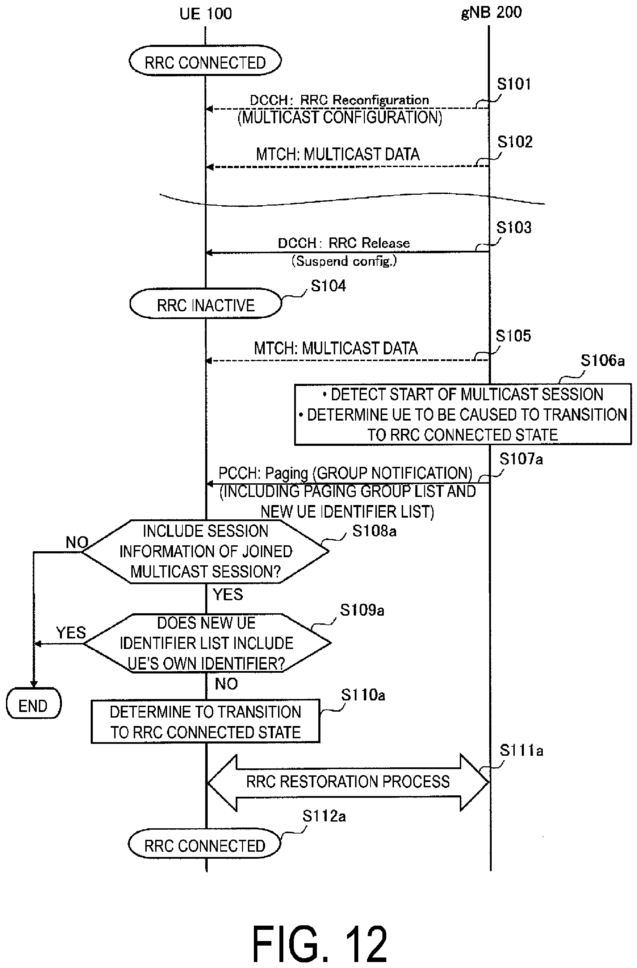

FIG. 12 is a flowchart indicating an operation example of a mobile communication system 1 according to the present modification. Prior to the present operation, it is assumed that the UE 100 has joined a multicast session. Here, differences from the first operation pattern of the first embodiment described above will be described, and overlapping description will be omitted.

The operations of step S101 to step S105 are the same as or similar to those of the first embodiment described above.

In step S106a, the gNB 200 may detect the start of the multicast session. Here, the multicast session is assumed to be a multicast session #A indicated by TMGI #A. In the present modification, the gNB 200 determines UE 100 to not be caused to transition to the RRC connected state from among a plurality of UEs 100 in the RRC inactive state that have joined the multicast session #A.

In step S107a, the gNB 200 generates a paging message to be used as a group notification and transmits the paging message on the PCCH. The UE 100 receives the paging message.

The paging message includes a paging group list (pagingGroupList) which is an example of session information. The paging group list (pagingGroupList) includes the TMGI #A indicating the multicast session to be started.

In the present modification, the paging message includes a new UE identifier list (i.e., Block list) including the UE identifier of each UE 100 that is not caused to transition to the RRC connected state among a plurality of UEs 100 that have joined the multicast session. In the paging message, the new UE identifier list may be associated with any entry (i.e., any TMGI) of the paging group list (pagingGroupList).

In step S108a, the UE 100 in the RRC inactive state checks whether the paging message received in step S107a includes the session information (TMGI) of the session that the UE has joined. When the paging message does not include the session information (TMGI) of the session that the UE 100 has joined (step S108: NO), the UE 100 in the RRC inactive state determines to maintain the RRC inactive state without transitioning to the RRC connected state.

On the other hand, when the paging message includes the session information (TMGI) of the session that the UE 100 has joined (step S108: YES), in step S109, the UE 100 in the RRC inactive state checks whether the new UE identifier list in the paging message includes the UE identifier of the UE. When the new UE identifier list includes the UE identifier of the UE (step S109a: YES), the UE 100 in the RRC inactive state determines to maintain the RRC inactive state without transitioning to the RRC connected state.

Note that, when the paging message includes the session information (TMGI) of the session that the UE 100 has joined (step S108a: YES), the RRC layer of the UE may notify the upper layer of the UE of the TMGI.

When the new UE identifier list does not include the UE identifier of the UE 100 (step S109a: NO), in step S110a, the UE 100 in the RRC inactive state determines to transition to the RRC connected state. In this case, in step S111a, the UE 100 in the RRC inactive state starts an RRC recovery process, and transmits an RRC Resume Request message to the gNB 200. In the RRC recovery process, the UE 100 transitions from the RRC inactive state to the RRC connected state (step S112a).

### (2) Second Embodiment

Next, a second embodiment will be described mainly focusing on differences from the first embodiment. In the present embodiment, the UEs 100 in the RRC inactive state that have joined a multicast session can be selectively paged by using the group notification defined in Release 17 of the 3GPP Technical Specifications by individually configuring the UEs to respond to the group notification in advance.

In the present embodiment, the UE 100 receives configuration information configured per UE from the gNB 200. The configuration information is information indicating whether to cause the UE 100 to determine transition to the RRC connected state by causing the UE 100 to take into account the session identifier (TMGI) in the paging message. That is, the configuration information according to the present embodiment is information for configuring whether the UE 100 should ignore the paging group list (pagingGroupList) in the paging message.

The UE 100 that is in the RRC inactive state and has joined the multicast session receives, from the gNB 200, a group notification notifying the UE of the start of a multicast session, that is, a paging message including the session identifier (TMGI) indicating the multicast session. When the configuration information indicates that the UE 100 is to be caused to determine RRC restoration taking into account the session identifier (TMGI), the UE 100 determines whether to transition to the RRC connected state based on the session identifier (TMGI). On the other hand, when the configuration information indicates that the UE 100 is not caused to determine RRC restoration taking into account the session identifier (TMGI), the UE determines whether to transition to the RRC connected state not based on the session identifier (TMGI).

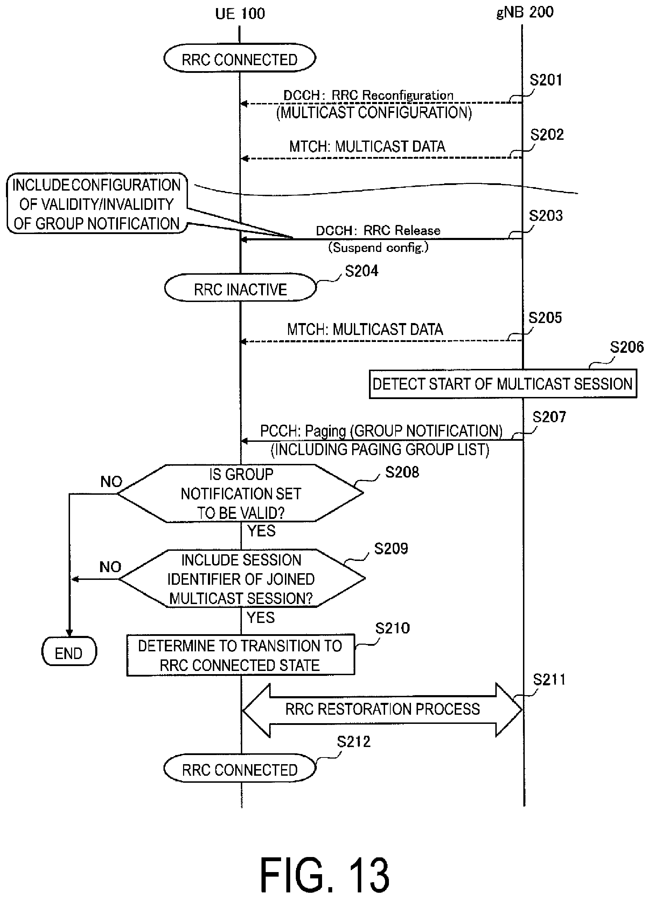

FIG. 13 is a flowchart indicating an operation example of the mobile communication system 1 according to the present embodiment. Prior to the present operation, it is assumed that the UE 100 has joined a multicast session. Here, differences from the above-described embodiment will be described, and overlapping description will be omitted.

The operations of steps S201 and S202 are the same as or similar to those of the first embodiment described above. However, in step S201, the gNB 200 may transmit configuration information indicating whether to respond to the group notification to the UE 100 through an RRC Reconfiguration message.

In step S203, the gNB 200 transmits an RRC Release message including Suspend config. to the UE 100. The UE 100 receives the RRC Release message. The RRC Release message may include configuration information indicating whether to respond to the group notification.

In step S204, the UE 100 transitions to the RRC inactive state from the RRC connected state upon reception of the RRC Release message in step S203.

The UE 100 that has transitioned to the RRC inactive state monitors a paging message used as a group notification. The UE 100 in the RRC inactive state may await the start of a multicast session. Alternatively, in step S205, the UE 100 in the RRC inactive state may receive multicast data on the MTCH through the multicast session based on the multicast configuration configured in step S201 or S203 (or the multicast configuration broadcast on the MCCH). The UE 100 may receive the multicast data on the MTCH through the multicast session based on the multicast configuration transmitted on the MCCH from the gNB 200.

In step S206, the gNB 200 may detect the start of the multicast session. Here, the multicast session is assumed to be a multicast session #A indicated by TMGI #A.

In step S207, the gNB 200 generates a paging message to be used as a group notification and transmits the paging message on the PCCH. The UE 100 receives the paging message. The paging message includes a paging group list (pagingGroupList). The paging group list (pagingGroupList) includes the TMGI #A indicating the multicast session to be started.

In step S208, the UE 100 in the RRC inactive state checks whether to respond to the group notification received in step S207 based on the configuration information of step S201 or S203. That is, the UE 100 checks whether the paging group list (pagingGroupList) in the paging message received in step S207 is configured to be valid or invalid. When the paging group list (pagingGroupList) is configured to be invalid (step S208: NO), the UE 100 in the RRC inactive state maintains the RRC inactive state without transitioning to the RRC connected state.

When the paging group list (pagingGroupList) is configured to be valid (step S208: YES), in step S209, the UE 100 in the RRC inactive state checks whether the paging group list (pagingGroupList) includes the session identifier (TMGI) of the multicast session that the UE has joined. When the paging group list (pagingGroupList) does not include the session identifier (TMGI) of the multicast session that the UE 100 has joined (step S209: NO), the UE in the RRC inactive state maintains the RRC inactive state without transitioning to the RRC connected state.

When the paging group list (pagingGroupList) includes the session identifier (TMGI) of the multicast session that the UE 100 has joined (step S209: YES), the UE in the RRC inactive state determines to transition to the RRC connected state in step S210. Note that, when the paging message includes session information (TMGI) of the session that the UE 100 has joined (step S209: YES), the RRC layer of the UE may notify the upper layer of the UE of the TMGI. In this case, in step S211, the UE 100 in the RRC inactive state starts an RRC recovery process, and transmits an RRC Resume Request message to the gNB 200. In the RRC recovery process, the UE 100 transitions from the RRC inactive state to the RRC connected state (step S212).

### (3) Third Embodiment

Next, a third embodiment will be described mainly focusing on differences from the first and second embodiments.

The UE 100 in the RRC inactive state that has joined a multicast session and has a multicast configuration valid for the multicast session may determine to maintain the RRC inactive state as described above, even when the UE receives a paging message (group notification) including the session identifier (TMGI) of the multicast session. That is, when the UE 100 in the RRC inactive state that has joined the multicast session can perform multicast reception without transitioning to the RRC connected state, the UE does not need to transition to the RRC connected state even when the UE has read the group notification.

In the present embodiment, when a paging message (group notification) includes the session identifier (TMGI) indicating the multicast session that the UE 100 has joined, the UE 100 determines whether to transition to the RRC connected state based on whether the UE has the multicast configuration needed for receiving the multicast session. To be more specific, when the paging message (group notification) includes the session identifier (TMGI), the UE 100 determines to transition to the RRC connected state based on the UE 100 not having the multicast configuration. On the other hand, when the paging message (group notification) includes the session identifier (TMGI), the UE 100 determines to maintain the RRC inactive state based on the UE 100 having the multicast configuration.

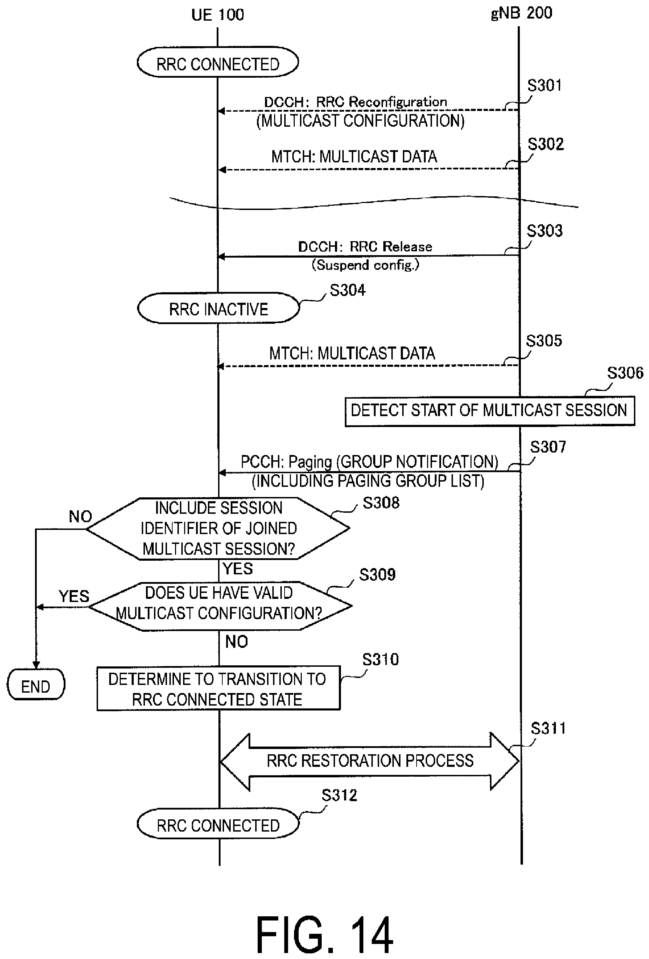

FIG. 14 is a flowchart indicating an operation example of the mobile communication system 1 according to the present embodiment. Prior to the present operation, it is assumed that the UE 100 has joined a multicast session. Here, differences from the above-described embodiment will be described, and overlapping description will be omitted.

The operations of step S301 to step S307 are the same as or similar to those of the embodiments described above.

In step S308, the UE 100 in the RRC inactive state checks whether the paging group list (pagingGroupList) in the received paging message includes the session identifier (TMGI) of the multicast session that the UE 100 has joined. When the paging group list (pagingGroupList) includes the session identifier (TMGI) of the multicast session that the UE 100 has joined (step S308: NO), the UE 100 in the RRC inactive state maintains the RRC inactive state without transitioning to the RRC connected state.

When the paging group list (pagingGroupList) includes the session identifier (TMGI) of the multicast session that the UE 100 has joined (step S308: YES), the UE 100 in the RRC inactive state checks in step S309 whether the UE has the multicast configuration (i.e., a valid multicast configuration) for the multicast session that the UE has joined. When the UE 100 has a valid multicast configuration (step S309: YES), the UE 100 in the RRC inactive state maintains the RRC inactive state without transitioning to the RRC connected state. Note that, when the paging message includes session information (TMGI) of the session that the UE 100 has joined (step S308: YES), the RRC layer of the UE may notify the upper layer of the UE of the TMGI. In addition, the RRC layer may notify the upper layer that the RRC layer has the multicast configuration related to the TMGI. This notification may be a notification indicating that multicast reception is performed in the above-described RRC inactive state.

When the UE has no valid multicast configuration (step S309: NO), the UE 100 in the RRC inactive state determines to transition to the RRC connected state in step S310. In addition, in step S311, the UE 100 in the RRC inactive state starts an RRC recovery process, and transmits an RRC Resume Request message to the gNB 200. In the RRC recovery process, the UE 100 transitions from the RRC inactive state to the RRC connected state (step S312).

### (4) Fourth Embodiment

Next, a fourth embodiment will be described mainly focusing on differences from the first to third embodiments.

When a plurality of multicast sessions are started simultaneously, a plurality of TMGIs are included in the paging group list (pagingGroupList) in the paging message, and thus the size of the paging message may increase. For example, when a video distribution application such as a television broadcast is realized by the MBS, a case in which multicast is started simultaneously on every channel at a certain time is conceivable. Thus, in the present embodiment, all UEs 100 waiting for a multicast session can be simultaneously paged, regardless of the TMGI.

To be more specific, in the present embodiment, UE 100 that is in the RRC inactive state and has joined a multicast session receives a paging message including identification information (flag information) indicating that all UEs 100 that have joined any multicast session are to be paged from the gNB 200. The UE 100 determines to transition from the RRC inactive state to the RRC connected state based on the paging message including the identification information. As a result, the identification information (flag information) may be included instead of the paging group list (pagingGroupList) in the paging message, so the size of the paging message can be reduced.

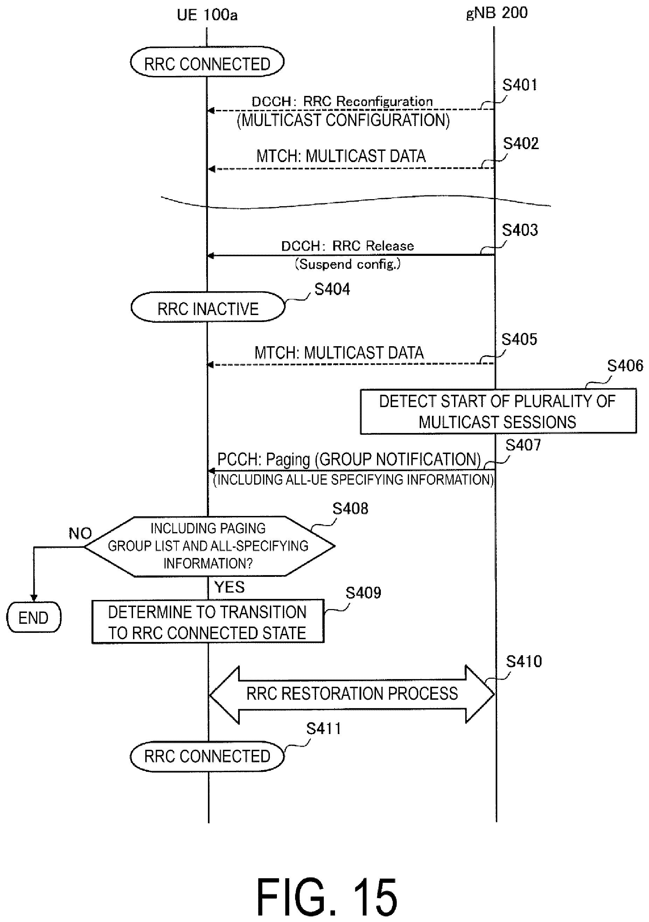

FIG. 15 is a flowchart indicating an operation example of a mobile communication system 1 according to the present embodiment. Prior to the present operation, it is assumed that the UE 100 has joined a multicast session. Here, differences from the above-described embodiment will be described, and overlapping description will be omitted.

The operations of step S401 to step S405 are the same as or similar to those of the first embodiment described above.

In step S406, the start of a plurality of multicast sessions is detected. In the present embodiment, the gNB 200 determines to simultaneously page UEs 100 for all of the plurality of multicast sessions (from another perspective, the plurality of TMGIs). However, the gNB 200 may apply the identification information (flag information) according to the present embodiment even when the start of one multicast session has been detected. When the identification information (flag information) according to the present embodiment is not applied, the gNB 200 may include a paging group list (pagingGroupList) including the plurality of TMGIs in a paging message.

In step S407, the gNB 200 transmits, on the PCCH, the paging message including the identification information (flag information) indicating that all UEs 100 joining any multicast session are to be paged. The UE 100 in the RRC inactive state receives the paging message. The paging message does not include the paging group list (pagingGroupList).

In step S408, the UE 100 in the RRC inactive state checks whether the paging message received in step S407 includes the identification information. The identification information may be an identifier, for example, "MBS multicast" or "All TMGIs".

When the paging message received in step S407 includes the identification information (step S408: YES), the UE 100 in the RRC inactive state determines to transition to the RRC connected state in step S409. In that case, the RRC layer of the UE 100 may notify the upper layer of the UE of the TMGI of the multicast session to be started (the multicast session that the UE has joined). The RRC layer of the UE 100 may notify the upper layers of the UE that all TMGIs are available for reception.

In addition, in step S410, the UE 100 in the RRC inactive state starts an RRC recovery process, and transmits an RRC Resume Request message to the gNB 200. In the RRC recovery process, the UE 100 transitions from the RRC inactive state to the RRC connected state (step S411).

### (5) Other Embodiment

Although the multicast reception in the RRC inactive state has been mainly described in the above-described embodiments and their modification, the operations according to the above-described embodiments may be applied to multicast reception in the RRC idle state. That is, the "RRC inactive state" in the operations according to the above-described embodiments and their modification may be read as "RRC idle state". With respect to the RRC idle state, RRC recovery (Resume) can be read as RRC establishment (Establishment).

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. In addition, the UE 100 may be a mobile termination (MT) of the IAB node.

In addition, although the term "network node" mainly refers to a base station, it may also refer to an apparatus of a core network or a part (CU, DU or RU) of a base station.

A program causing a computer to execute each of the processing performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 and the gNB 200 may be implemented as a semiconductor integrated circuit (chipset, System on a chip (SoC)).

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include," "comprise" and variations thereof do not mean "include only items stated" but instead mean "may include only items stated" or "may include not only the items stated but also other items". The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

This application claims priority to US Provisional Patent Application No. 63/410719 (filed on September 28, 2022), the contents of which are incorporated herein by reference in their entirety.

### (6) Supplementary Notes

Features relating to the embodiments described above are described below as supplements.

### Supplementary Note 1

A communication method used in a mobile communication system that provides a multicast/broadcast service (MBS), the communication method including the steps of:
receiving, by a user equipment in a radio resource control (RRC) inactive state that has joined a multicast session, a paging message from a network node, the paging message notifying the user equipment of a start of the multicast session; and
determining, by the user equipment, whether to transition from the RRC inactive state to an RRC connected state in response to receiving the paging message,
wherein the paging message includes:
   session information about the multicast session; and
   identification information associated with the session information, the identification information specifying one or more user equipments to be caused to transition to the RRC connected state among a plurality of user equipments that have joined the multicast session, and
   the determining includes determining whether to transition to the RRC connected state based on the session information and the identification information.

### Supplementary Note 2

The communication method described in supplementary note 1, wherein the identification information is a list including an identifier of each of the one or more user equipments to be caused to transition to the RRC connected state among the plurality of user equipments, and the determining includes determining to transition to the RRC connected state based on the paging message including the session information and the list including the identifier of each of the one or more user equipments.

### Supplementary Note 3

The communication method described in supplementary note 2, wherein the paging message includes, as the identification information, all-specifying information instead of the list, when the network node causes all of the plurality of user equipments to transition to the RRC connected state, and
the determining includes determining to transition to the RRC connected state based on the paging message including the session information and the paging message including the all-specifying information.

### Supplementary Note 4

The communication method described in supplementary note 1, wherein the identification information is a list including a user equipment identifier of each of the one or more user equipments to not be caused to transition to the RRC connected state among the plurality of user equipments, and
the determining includes determining to transition to the RRC connected state based on the paging message including the session information and the list not including the user equipment identifier of each of the one or more user equipments.

### Supplementary Note 5

The communication method described in any one of supplementary notes 1 to 4, the communication method further including:
receiving, from the network node, configuration information indicating whether the identification information is valid,
wherein the determining includes determining whether to transition to the RRC connected state based on the session information without taking into account the identification information, when the configuration information indicates that the identification information is invalid.

### Supplementary Note 6

The communication method described in supplementary note 5, wherein the receiving of the configuration information includes receiving a dedicated RRC message including the configuration information.

### Supplementary Note 7

A communication method used in a mobile communication system for providing a multicast/broadcast service (MBS), the communication method including the steps of:
receiving, by a user equipment, configuration information configured per user equipment from a network node;
receiving, by the user equipment in a radio resource control (RRC) inactive state that has joined a multicast session, a paging message from the network node, the paging message notifying the user equipment of a start of the multicast session; and
determining, by the user equipment, whether to transition from the RRC inactive state to an RRC connected state in response to receiving the paging message,
wherein the paging message includes a session identifier indicating the multicast session, and the configuration information is information indicating whether to cause the user equipment to perform the determining taking into account the session identifier.

### Supplementary Note 8

The communication method described in supplementary note 7, wherein
the determining includes the steps of:
determining whether to transition to the RRC connected state based on the session identifier, when the configuration information indicates that the user equipment is caused to perform the determining taking into account the session identifier; and
determining whether to transition to the RRC connected state not based on the session identifier, when the configuration information indicates that the user equipment is not caused to perform the determining taking into account the session identifier.

### Supplementary Note 9

A communication method used in a mobile communication system for providing a multicast/broadcast service (MBS), the communication method including the steps of:
receiving, by the user equipment in a radio resource control (RRC) inactive state that has joined a multicast session, a paging message from a network node, the paging message notifying the user equipment of a start of the multicast session; and
determining, by the user equipment, whether to transition from the RRC inactive state to an RRC connected state in response to receiving the paging message,
wherein the determining includes determining whether to transition to the RRC connected state based on whether the user equipment has a multicast configuration required to receive the multicast session, when the paging message includes a session identifier indicating the multicast session that the user equipment has joined.

### Supplementary Note 10

The communication method described in supplementary note 9, wherein the determining includes determining to transition to the RRC connected state based on the user equipment not having the multicast configuration, when the paging message includes the session identifier.

### Supplementary Note 11

A communication method used in a mobile communication system for providing a multicast/broadcast service (MBS), the communication method including the steps of:
receiving, by the user equipment in a radio resource control (RRC) inactive state that has joined a multicast session, a paging message from a network node, the paging message including identification information indicating to page all user equipments that have joined any multicast session; and
determining, by the user equipment, to transition from the RRC inactive state to an RRC connected state based on the paging message including the identification information.

### (7) Additional Notes

Supplementary information relating to the embodiments described above is described below.

### Introduction

The work for enhancing the MBS (eMBS) is intended to support multicast reception by UE in the inactive state as follows.
- To define support for multicast reception by UE in the RRC inactive state.
   - PTM configuration of the UE receiving multicast in the RRC inactive state
   - Investigation of the impact of mobility and state transition on the UE receiving multicast in the RRC inactive state (seamless/lossless mobility is not mandatory).

RAN2#119e started a discussion for this purpose and reached a series of agreements. Moreover, details of multicast reception in the inactive state are discussed in this additional note.

### Discussion

### Distribution Mode Baseline

Release 17 defines two distribution modes that are a mode called "distribution mode 1" for a multicast session and a mode called "distribution mode 2" for a broadcast session. While, in the distribution mode 1, reception on the MTCH is configured with RRCReconfiguration only for UE in a connected state, in the distribution mode 2, reception on the MTCH is configured with the MCCH for all UEs in an RRC state.

RAN2#119e has defined that these distribution modes are candidates for multicast reception in the inactive state, i.e., option 1 and option 2.

For PTM configuration delivery, RAN2 further studies the following solutions.
Option 1: Dedicated signaling
Option 2: SIB + MCCH-based solution
A "combination" of the options is not excluded.

According to the supplementary notes submitted to RAN2#119e, the support for multicast reception in an inactive state is motivated for two reasons: network congestion and UE power saving.

Observation 1: Network congestion and UE power saving are the motivation for multicast reception in the inactive state.

According to this supplementary note, option 1 is superior to option 2 in terms of signaling overhead that directly affects network congestion. In other words, from the motivational point of view, it makes no sense to allow additional signaling overhead caused by SIB20 and MCCH transmission when the network is in congestion.

Observation 2: Signaling overhead caused by MCCH transmission is significant under conditions of network congestion.

From the perspective of UE in the inactive state, the UE performs DRX for paging/monitoring and reduces power consumption. When option 2 is used for multicast reception in the inactive state, the UE needs to perform an additional DRX activity, that is, MCCH monitoring, which causes additional power consumption. Therefore, this option is not consistent with the motivation of the UE for reducing power consumption.

Observation 3: MCCH monitoring activities cause additional UE power consumption in the RRC inactive state.

Of course, in option 1, the UE is obliged to start the RRC Resume procedure when the MBS configuration is provided or updated. However, it is clarified that "when the MRB is configured and the session is active, the configuration is not frequently changed during the session". In addition, it has also been agreed in RAN2#119e that "continuation of the multicast service after cell reselection in the RRC inactive state (i.e., without resuming the RRC connection) is supported (when configuring a new cell is available to the UE)". Therefore, there is no big problem in network congestion and power consumption of the UE.

In addition, Release 17 defines that multicast services are provided in so-called distribution mode 1 (option 1), which is commonly recognized in RAN2 as the basic concept of the multicast design. The Releases have no reason to make such significant changes.

In view of the above description, option 1 is a simple way to provide a PTM configuration.

Proposal 1: The RAN2 should agree that the PTM configuration is provided by dedicated signaling, that is, option 1.

### Transition of RRC States

RAN2#119e has considered that further study is needed for change in RRC states.

In Release 18, multicast reception for UE in an inactive state supports at least the following scenarios, based on the premise that the UE already has a valid PTM configuration.
- Scenario 1: The UE was connected and received multicast, and when it becomes inactive, it continues receiving multicast.
- Scenario 2: The UE has joined a multicast session and has been induced to be inactive. Further study is needed for a case in which a state changes, such as a case in which a service is not provided in an inactive state.

It is believed that change in RRC states has many aspects from the network and UEs perspective. Therefore, each case will be described below.

### Subcase 1: Release/stop of a multicast session

RAN2#119e has defined subcase 1 as an example.

Further study is needed for a case in which a state changes, such as a case in which a service is not provided in an inactive state.

It is considered that, when the UE in the inactive state is receiving the MBS service, the multicast session is released or stopped, and the gNB stops the transmission of the PTM/MTCH accordingly. In this case, the UE has no reason for continuing monitoring the MTCH; however, as long as the PTM configuration is not deleted, the UE needs to monitor the MTCH. From the viewpoint of power saving of the UE, it is desirable to stop monitoring the MTCH as soon as possible.

Observation 4: It is inefficient from the viewpoint of power consumption of the UE that the UE continues monitoring the PTM/MTCH after the multicast session is released or deactivated.

Thus, the UE needs to be informed by the gNB of the release/deactivation of the configured multicast session. Further study is needed as to whether release and inactivity should be handled separately and which signaling (such as MACCE or paging) should be used for this notification.

Proposal 2: When a multicast session is released or deactivated, the UE in the inactive state should be notified of the intent and stop monitoring the PTM/MTCH as soon as possible should be agreed on.

### Subcase 2: Selective Transition

RAN2#119e has reached the following agreement on subcase 2.

The gNB is entrusted to determine whether the UE (or UEs) can receive a multicast session in the inactive state. Further study is needed as to what information is to be provided to the gNB in order to make the decision (related to the discussion of SA2).

It is supported that the gNB transmits one multicast session to UEs in the connected and inactive states in the same cell. Further study is needed as to how the gNB would configure the support. It is assumed that the network can select which UE would receive in the RRC inactive state and which UE would receive in the RRC connected state, and can move the UE between states for reception of the multicast service.

To release UE to be inactive, the gNB may select UE to release in the same manner as the current, that is, in RRC Release with Suspend Config., based on UE capabilities, UE assistance information, and/or CN assistance information (when defined). Therefore, with respect to RRC release messages, no enhancement for selective transitions of the UE is foreseen.

On the other hand, when the gNB pages the UE to be inactive, the gNB transmits a multicast active notification, that is, RAN paging including the TMGI. However, according to current specifications, all UEs start the RRC Resume procedure when the paging message includes the TMGI of interest. When the gNB only includes the UE-ID for selective paging (i.e., no TMGI for paging selected UE of Release 18), UE of Release 17 that is inactive and waiting for multicast activation cannot be paged. Thus, RAN2 needs to discuss whether the notification of multicast activation needs to be extended to page a subset of UE.

Proposal 3: RAN2 needs to discuss whether the notification of multicast activation (i.e., RAN paging using the TMGI) needs to be enhanced to page a subset of UE.

### Subcase 3: QoS Enforcement

RAN2#119e has reached the following agreement on subcase 3.

HARQ feedback and PTP are not supported in the RRC-inactive multicast reception.

According to agreement, multicast reception in the inactive state is similar to the MBS broadcast reception defined in Release 17 (so-called distribution mode 2). MBS broadcast is of the best-effort type.

On the other hand, in a multicast session, it is important to guarantee QoS/reliability. RAN2 #119e has proposed to introduce threshold values for reception qualities such as RSRP and BLER, which are considered to be used to ensure a certain level of QoS requirement for multicast reception. In addition, the threshold values are also useful for the network to manage QoS requirements. When inactive multicast reception does not meet the corresponding QoS requirements, the UE transitions to the connected state and needs to utilize HARQ feedback/retransmission or PTP (or SplitMRB) to ensure the reception quality.

Observation 5: Even when the UE is in the inactive state, the multicast session needs to ensure certain QoS requirements.

Regarding the threshold values for RSRP, since the NRMBS assumes single-cell transmission, it is considered that the UE needs to always transition to the connected state every time the UE moves to a cell edge or performs cell reselection. This may not be said to be an optimal operation depending on deployments from the viewpoint of network congestion and power saving of the UE.

The threshold values for BLER are considered to be simpler to ensure the QoS requirements. Therefore, these options need to be discussed to introduce transitions of RRC states based on reception qualities.

Proposal 4: RAN2 should agree that the UE in the inactive state transitions to the connected state when the reception quality becomes worse than the threshold value (such as RSRP or BLER).

### Subcase 4: Mobility and Service Continuity

RAN2#119e has agreed on the following description for subcase 4.

Continuation of the multicast service after cell reselection in the RRC inactive state (i.e., without resuming the RRC connection) is supported (when a configuration of a new cell is available to the UE). Further study is needed as to whether the UE needs to resume the connection. In addition, further study is needed as to the influence of inter-GNB mobility on RAN3.

When cell reselection for a neighboring cell is performed during an active multicast session, when the UE in the inactive state is not able to use the session configuration within a new cell, the UE needs to resume the RRC connection to obtain the multicast MRB configuration.

In distribution mode 1 of Release 17, the PTM configuration is provided by an RRC Reconfiguration message, so the UE needs to be always connected to receive the PTM configuration. In order to avoid a transition to the connected state, it is conceivable to provide a PTM configuration updated using an RRC release message. In this case, when the UE transmits an RRC Resume Request message, the gNB responds with an RRC Release containing the PTM configuration. Thus, the UE does not need to transition to the connected state in order to be provided with the updated PTM configuration. This procedure can be used during cell reselection (i.e., started by the UE when no PTM configuration is available in a new cell) or during RAN paging (i.e., started by the network when the PTM configuration needs to be updated).

Proposal 5: RAN2 should agree that RRC Release will be enhanced to provide a PTM configuration.

Another issue to consider is the impact of UE mobility under the assumption that "seamless/lossless mobility is not needed" as described in the WID. In Release 17, it is clear that the PTM configuration in distribution mode 1 is valid only within in the cell in which the UE is configured. When a handover is performed, the target cell connects to a new PTM configuration to reconfigure the UE. On the other hand, when inactive UE performs mobility in the idle mode, the time when the existing PTM configuration is no longer valid within the reselected cell (i.e., a new cell) can be considered as the starting point.

In order for the UE to be handed over from the serving cell to the target cell or reconfigured by the reselected cell, requiring inactive UE to always transition to a connected state (e.g., before or after performing cell reselection) may be the simplest solution with minimal impact on the specification.

As a more efficient method, since the PTM configuration is valid in the RNA, the gNB needs to be able to apply the same configuration in the RNA of each UE. An advantage of this method is that the UE in the inactive state does not need to reconfigure and can continue to receive the MTCH in the RNA. On the other hand, the RNA is UE-specific, which leads to increased network complexity.

A more flexible and less complex method is that the gNB provides a cell list within the configuration, whereby the configuration is considered valid in the cells on the list. The cell list can be configured to be either cell-specific, DU/CU-related, UE-specific, RNA-related, MRB area-specific, or MBS service area-specific, depending on the NW implementation.

Therefore, the RAN2 should discuss whether to introduce the area scope of such configurations.

Proposal 6: For the solution based on distribution mode 1, the RAN2 should discuss whether the configuration for receiving the MTCH is valid within the serving cell or valid within the area (such as the RNA or cell list).

### REFERENCE SIGNS

1: Mobile communication system
10: RAN
20: CN
100: User equipment (UE)
110: Receiver
120: Transmitter
130: Controller
200: gNB (Base station)
210: Transmitter
220: Receiver
230: Controller
240: Backhaul communicator

## Claims

1. A communication method used in a mobile communication system for providing a multicast/broadcast service (MBS), the communication method comprising the steps of:
receiving, by a user equipment in a radio resource control (RRC) inactive state that has joined a multicast session, a paging message from a network node (or a network apparatus), the paging message notifying the user equipment of a start of the multicast session; and
determining, by the user equipment, whether to transition from the RRC inactive state to an RRC connected state in response to receiving the paging message,
wherein the paging message comprises:
session information about the multicast session; and
identification information associated with the session information, the identification information being configured to specify one or more user equipments to be caused to transition to the RRC connected state among a plurality of user equipments that have joined the multicast session, and
the determining comprises determining whether to transition to the RRC connected state based on the session information and the identification information.

2. The communication method according to claim 1, wherein
the identification information is a list comprising an identifier of each of the one or more user equipments to be caused to transition to the RRC connected state among the plurality of user equipments, and
the determining comprises determining to transition to the RRC connected state based on the paging message comprising the session information and the list comprising the identifier of each of the one or more user equipments.

3. The communication method according to claim 2, wherein
the paging message comprises, as the identification information, all-specifying information instead of the list, when the network node causes all of the plurality of user equipments to transition to the RRC connected state, and
the determining comprises determining to transition to the RRC connected state based on the paging message comprising the session information and the paging message comprising the all-specifying information.

4. The communication method according to claim 1, wherein
the identification information is a list comprising a user equipment identifier of each of the one or more user equipments to not be caused to transition to the RRC connected state among the plurality of user equipments, and
the determining comprises determining to transition to the RRC connected state based on the paging message comprising the session information and the list not comprising the user equipment identifier of each of the one or more user equipments.

5. The communication method according to any one of claims 1 to 4, the communication method further comprising:
receiving, from the network node, configuration information indicating whether the identification information is valid,
wherein the determining comprises determining whether to transition to the RRC connected state based on the session information without taking into account the identification information, when the configuration information indicates that the identification information is invalid.

6. The communication method according to 5, wherein the receiving of the configuration information comprises receiving a dedicated RRC message comprising the configuration information.

7. A communication method used in a mobile communication system for providing a multicast/broadcast service (MBS), the communication method comprising the steps of:
receiving, by a user equipment, configuration information configured per user equipment from a network node;
receiving, by the user equipment in a radio resource control (RRC) inactive state that has joined a multicast session, a paging message from the network node, the paging message notifying the user equipment of a start of the multicast session; and
determining, by the user equipment, whether to transition from the RRC inactive state to an RRC connected state in response to receiving the paging message,
wherein the paging message comprises a session identifier indicating the multicast session, and
the configuration information is information indicating whether to cause the user equipment to perform the determining taking into account the session identifier.

8. The communication method according to claim 7, wherein
the determining comprises the steps of:
determining whether to transition to the RRC connected state based on the session identifier, when the configuration information indicates that the user equipment is caused to perform the determining taking into account the session identifier; and
determining whether to transition to the RRC connected state not based on the session identifier, when the configuration information indicates that the user equipment is not caused to perform the determining taking into account the session identifier.

9. A communication method used in a mobile communication system for providing a multicast/broadcast service (MBS), the communication method comprising the steps of:
receiving, by the user equipment in a radio resource control (RRC) inactive state that has joined a multicast session, a paging message from a network node, the paging message notifying the user equipment of a start of the multicast session; and
determining, by the user equipment, whether to transition from the RRC inactive state to an RRC connected state in response to receiving the paging message,
wherein the determining comprises determining whether to transition to the RRC connected state based on whether the user equipment has a multicast configuration required to receive the multicast session, when the paging message comprises a session identifier indicating the multicast session that the user equipment has joined.

10. The communication method according to claim 9, wherein the determining comprises determining to transition to the RRC connected state based on the user equipment not having the multicast configuration, when the paging message comprises the session identifier.

11. A communication method used in a mobile communication system for providing a multicast/broadcast service (MBS), the communication method comprising the steps of:
receiving, by the user equipment in a radio resource control (RRC) inactive state that has joined a multicast session, a paging message from a network node, the paging message comprising identification information indicating to page all user equipments that have joined any multicast session; and
determining, by the user equipment, to transition from the RRC inactive state to an RRC connected state based on the paging message comprising the identification information.
